# EUROPÄISCHE PATENTSCHRIFT

(11) **EP 1 821 448 B1**
(45) Veröffentlichungstag und Bekanntmachung des Hinweises auf die Patenterteilung: **08.09.2010**
(21) Anmeldenummer: 07001795.9
(22) Anmeldetag: 26.01.2007
(51) Int. Cl.: H04L 7/033, H04L 7/04

(54) **Verfahren zur Synchronisation der Übertragung einer Bitfolge**
Method for synchronising the transfer of a bitstream
Procédé pour la synchronisation de la transmission d'un train de bits

(30) Priorität: 15.02.2006 DE 102006007200
(43) Veröffentlichungstag der Anmeldung: 22.08.2007
(73) Patentinhaber: SICK STEGMANN GmbH, 78166 Donaueschingen (DE)
(72) Erfinder: Francescon, Massimo, 10126 Torino (IT); Siraky, Josef, 78166 Donaueschingen (DE); Armbruster, Ulrich, 78166 Donaueschingen (DE)
(74) Vertreter: Patentanwälte Westphal, Mussgnug & Partner

(56) Entgegenhaltungen:
- EP-A- 0 626 771
- EP-A- 0 738 057
- EP-A- 0 973 289
- US-A- 5 699 389
- US-A1- 2006 120 496
- US-B1- 6 389 088

## Beschreibung

Die Erfindung betrifft ein Verfahren zur Synchronisation der Übertragung einer Bitfolge.

Soll eine Bitfolge übertragen werden, muss die Bitfolge abgetastet werden, und der bei der Abtastung für jedes Bit erhaltene Wert 0 oder 1 wird für das jeweilige Bit übertragen. Da die Bits mit einer bestimmten Bitfrequenz aufeinander folgen, liegt jedes Bit für eine gewisse Zeit an, wobei in der Regel in der Mitte dieser Zeitspanne die Abtastung erfolgt. Bei diesem Verfahren können jedoch Ungenauigkeiten insbesondere durch unterschiedliche Laufzeiten der Signale, beispielsweise bei mehreren Sendern innerhalb eines Bussystems auftreten, welche bewirken, dass oftmals die Bits erst mit einer gewissen Zeitverzögerung anliegen. Weiterhin sind die Bitpulse nur theoretisch als Rechteckimpulse ausgebildet. In der Regel ergeben sich exponentiell abfallende und/oder ansteigende Pulsflanken, wobei die Pulsform nicht immer identisch ist und beispielsweise von den Übertragungseigenschaften der Datenleitung abhängt. Wird daher die Abtastung durchgeführt, während noch nicht das volle Signal anliegt oder während das Signal noch nicht vollständig abgefallen ist, kann für ein Bit irrtümlich der falsche Bitwert übertragen werden.

Aus der EP 0 973 289 A2 und der EP 0 738 057 A2 ist es bekannt, Daten phasenverschoben abzutasten und dann aus den so erhaltenen Abtastdaten diejenigen auszuwählen, die mit der günstigsten Abtastphase abgetastet wurden.

Die Aufgabe der Erfindung besteht daher darin, ein Verfahren zur Abtastung einer Bitfolge und insbesondere zur Synchronisation der Übertragung einer Bitfolge bereit zu stellen, bei welchem die Wahrscheinlichkeit für Übertragungsfehler verringert wird.

Die Aufgabe der Erfindung wird gelöst durch ein Verfahren mit den Merkmalen des Patentanspruchs 1.

Vorteilhafte Ausgestaltungen und Weiterbildungen der Erfindung sind in den Unteransprüchen angegeben.

Das erfindungsgemäße Verfahren zur Synchronisation der Übertragung einer Bitfolge der Bitfrequenz f1 weist folgende Schritte auf: Zunächst wird ein Bitpuls, der nicht notwendigerweise zu der zu übertragenden Bitfolge gehören muss, mit einer Abtastfrequenz f2, die größer ist als die Bitfrequenz f1 der Bitfolge, abgetastet, so dass sich innerhalb eines Bitpulses mehrere Abtastpunkte ergeben. Sämtlichen Abtastpunkten wird dann der Wert 0 zugeordnet. Dies geschieht vorzugsweise in einem Register, dessen Länge der Anzahl der Abtastpunkte innerhalb eines Bitpulses entspricht. Anschließend wird innerhalb des Bitpulses der Abtastpunkt ermittelt, bei dem die Flanke des Bitpulses detektiert wird. Eine Flanke wird dabei durch einen Übergang zwischen den Bitwerten 0 und 1 verursacht und wird in der Regel als Durchgang durch einen bestimmten Schwellenwert definiert. Anschließend wird dem Abtastpunkt, bei dem eine Flanke detektiert wird, der Wert 1 zugeordnet. Die übrigen Abtastpunkte behalten den Wert 0 bei. Innerhalb eines Bitpulses ergibt sich dann ein gewisser Bereich an Abtastpunkten, denen der Wert 0 zugeordnet wurde. Dies ist der Bereich, in dem kein Wechsel zwischen Bitwerten detektiert werden konnte und in dem somit die Bitwerte stabil anliegen. Daher erfolgt anschließend das Abtasten der Bitfolge mit der Abtastfrequenz f1 synchronisiert mit einem dieser Abtastpunkte, denen der Wert 0 zugeordnet wurde. Da in diesem Bereich die Bitwerte der einzelnen Bitpulse mit hoher Wahrscheinlichkeit stabil anliegen, wird die Fehlerquote bei der Abtastung verringert und die Übertragungsqualität verbessert.

Zur Verbesserung der Statistik werden, vorzugsweise bevor die eigentliche Bitfolge übertragen und abgetastet wird, mehrere Bitpulse, vorzugsweise Bitpulse einer definierten Testfolge, abgetastet. Zu jedem Bitpuls wird der Abtastpunkt ermittelt, zu welchem die Flanke des Bitpulses detektiert werden konnte und dem Abtastpunkt der Wert 1 zugeordnet. Abtastpunkte, denen bereits bei vorhergehenden Abtastungen von Bitpulsen der Wert 1 zugeordnet wurde, behalten diesen Wert bei. Somit ergibt sich bei mehreren Abtastungen ein gewisser Bereich an Abtastpunkten, denen der Wert 0 zugeordnet wurde, der höchstwahrscheinlich kleiner ausfällt als bei nur einer Abtastung eines Bitpulses, innerhalb dessen jedoch mit großer Wahrscheinlichkeit die Bitwerte der Bitpulse stabil anliegen.

Das mehrmalige Abtasten von Bitpulsen, insbesondere von Bitpulsen einer definierten Testfolge, besonders bevorzugt das mehrmalige, insbesondere das sechzehnmalige, Abtasten der Bitpulse einer definierten Testfolge geschieht vorzugsweise als Lernzyklus vor der Übertragung und Abtastung der eigentlichen zu übertragenden Bitfolge und gewährleistet eine ausreichende Statistik durch die Ermittlung der Flanke bei mehreren Bitpulsen, so dass sich abschließend ein zuverlässiges Bild darüber ergibt, in welchem Bereich eines einzelnen Bitpulses der Bitwert stabil anliegt und in welchem Bereich die Übergänge zwischen den Bitwerten auftreten. Dadurch wird sichergestellt, dass die Bitfolge optimal abgetastet und übertragen werden kann. Bei der Verwendung einer definierten Testfolge von Bitpulsen ist bekannt, zwischen welchen Bitpulsen Flanken auftreten, so dass somit überprüft werden kann, wie zuverlässig die Abtastung der Bitpulse ist.

Vorzugsweise wird nach Schritt c) und vor Schritt d) das Zentrum des Bereichs von Abtastpunkten bestimmt, denen der Wert 0 zugeordnet wurde und in Schritt d) die Bitfolge synchronisiert mit dem als Zentrum bestimmten Abtastpunkt abgetastet. Die Wahrscheinlichkeit dafür, dass ein Bitwechsel an den Randpunkten des Bereichs von Abtastpunkten, denen der Wert 0 zugeordnet wurde, stattfindet, ist höher als dafür, dass ein Bitwechsel an den von den Randpunkten entfernt liegenden Abtastpunkten stattfindet. Wird daher als bestmöglicher Abtastpunkt für eine Abtastung der Bitfolge ein Abtastpunkt im Innenbereich des Bereichs von Abtastpunkten, denen der Wert 0 zugeordnet wurde, gewählt, verringert sich die Fehlerquote bei der Abtastung und anschließenden Übertragung der Bitfolge weiter.

Um den möglichst weit von den Randpunkten, aber innerhalb des Bereichs von Abtastpunkten, denen der Wert 0 zugeordnet wurde, liegenden Abtastpunkt als Zentrum und bestmöglichen Abtastpunkt bestimmen zu können, wird als Zentrum der Abtastpunkt ermittelt, der bei einer ungeraden Anzahl N von Abtastpunkten mit dem Wert 0 dem Wert N/2 + ½ oder N/2 + 1 ½ entspricht, und der bei einer geraden Anzahl N von Abtastpunkten mit dem Wert 0 dem Wert N/2 + 1 entspricht.

Bei einer vorteilhaften Weiterbildung der Erfindung wird in Schritt d) die Bitfolge synchronisiert mit jedem der Abtastpunkte, denen der Wert 0 zugeordnet wurde, abgetastet. Anschließend werden die erhaltenen Abtastwerte aufaddiert und die dabei erhaltene Summe durch die Anzahl der Abtastpunkte, denen der Wert 0 zugeordnet wurde, dividiert. Der dabei ermittelte Mittelwert wird nach Rundung als Abtastwert für das jeweilige Bit übertragen. Diese Mittelwertbildung über den gesamten Bereich von Abtastpunkten, denen der Wert 0 zugeordnet wurde, und der sich damit als stabiler Bereich erwiesen hat, macht das erfindungsgemäße Verfahren unempfindlicher gegen Störungen.

Bei einer besonders vorteilhaften Ausgestaltung der Erfindung ist die Abtastfrequenz f2 ein ganzzahliges Vielfaches der Bitfrequenz f1. Dadurch ist gewährleistet, dass innerhalb eines Bits immer die gleiche Anzahl von Abtastpunkten liegt.

Vorzugsweise ist die Abtastfrequenz f2 achtmal größer als die Bitfrequenz f1, so dass sich innerhalb eines Bits acht Abtastpunkte ergeben. Eine derartige Anzahl an Abtastpunkten genügt, damit die Abtastpunkte in genügend kleinem Abstand liegen, um feststellen zu können, in welchem Bereich die Bitwerte stabil anliegen. Allerdings ist eine derartige Anzahl an Abtastpunkten auch noch überschaubar und verarbeitbar.

Bei einer besonders bevorzugten Ausgestaltung der Erfindung wird die Bitfolge zwischen Messeinheiten des Senders und einer Auswerteeinheit des Empfängers ausgetauscht. Gerade bei einer Übertragung von Messwerten ist es besonders wichtig, dass die Fehlerquote der Übertragung besonders klein ist. Insbesondere spielt dies eine wichtige Rolle, falls die Messeinheit als Positionsmesseinheit ausgebildet ist.

Die erfindungsgemäße Vorrichtung zur Durchführung des erfindungsgemäßen Verfahren zur Synchronisation der Übertragung einer Bitfolge der Bitfrequenz f1 gemäß einem der vorhergehenden Ansprüche weist einen Sender und einen Empfänger auf, zwischen welchen die Bitfolge übertragen wird. Weiterhin weist die Vorrichtung eine erste Vorrichtung zum Abtasten wenigstens eines Bitpulses in dem Empfänger mit einer Abtastfrequenz f2, die größer ist als die Bitfrequenz f1 der Bitfolge, so dass sich innerhalb dieses Bitpulses mehrere Abtastpunkte ergeben. Die Vorrichtung weist eine zweiten Vorrichtung zum Zuordnen des Werts 0 zu sämtlichen Abtastpunkten und eine dritte Vorrichtung zum Ermitteln des Abtastpunktes, bei dem eine Flanke des Bitpulses detektiert wird, und zum Zuordnen des Wertes 1 zu diesem Abtastpunkt. Schließlich weist die Vorrichtung eine vierte Vorrichtung zum Abtasten der Bitfolge mit der Bitfrequenz f1 synchronisiert mit einem der Abtastpunkte, denen der Wert 0 zugeordnet wurde, auf.

Die Erfindung wird anhand der nachfolgenden Figuren ausführlich erläutert. Es zeigt
- Figur 1: einen optimalen Signalverlauf mehrerer Bitpulse und
- Figur 2: einen realistischen Signalverlauf mehrerer Bitpulse.

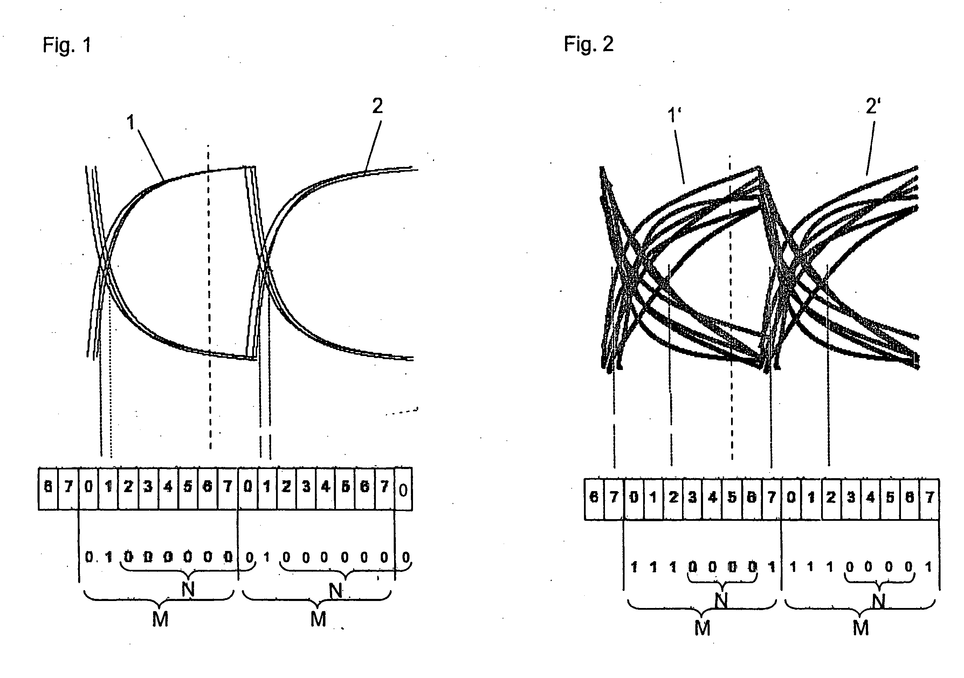

Die Figur 1 zeigt einen optimalen Signalverlauf 1, 2 mehrerer Bitpulse, Figur 2 einen realistischen Signalverlauf 1', 2' mehrer Bitpulse.

In beiden Figuren 1 und 2 sind jeweils zwei aufeinander folgende Bitpulse dargestellt, wobei ein Teil der dargestellten Signalverläufe 1, 1' einen Bitwertwechsel von 1 auf 0 und der andere Teil der dargestellten Signalverläufe 2, 2' einen Bitwertwechsel von 0 auf 1 in den beiden vollständig dargestellten Bitpulsen zeigen. Auch die optimalen Signalverläufe 1, 2 zeigen keinen theoretischen Rechteckimpulsverlauf, sondern jeweils einen exponentiellen Anstieg bzw. Abfall des Signals. Dabei tritt zwischen den unterschiedlichen Signalverläufen 1, 2 jedoch kaum eine zeitliche Verschiebung auf, und die Flankenprofile der Signale sind jeweils fast identisch.

Jeder Bitpuls wird mit einer Abtastfrequenz f2 abgetastet, die ein ganzzahliges Vielfaches, welches mit M bezeichnet wird, der Bitfrequenz f1 ist, und die insbesondere achtmal größer ist als die Bitfrequenz f1, mit welcher die einzelnen Bitpulse aufeinander folgen und mit welcher insbesondere auch eine zu übertragende Bitfolge abgetastet werden soll. Somit ergeben sich für jeden Bitpuls M Abtastpunkte mit M = 8. Die einzelnen Abtastpunkte sind für jedes Bit in den Figuren 1 und 2 in dem Balken unterhalb der Signalverläufe 1, 2, 1', 2' von 0 bis 7 durchnummeriert dargestellt.

Um das Verfahren zur möglichst fehlerfreien Abtastung der Bitfolge durchführen zu können, wird zunächst in einem Register, dessen Länge der Zahl der Abtastpunkte pro Bitpuls entspricht und welches vorliegend somit acht von 0 bis 7 nummerierte Registerplätze aufweist, jedem Abtastpunkten der Wert 0 zugeordnet. Nur der besseren Übersicht halber sind in den Figuren 1 und 2 die Abtastpunkte und die den Abtastpunkten zugeordneten Werte für zwei Bits nebeneinander dargestellt.

Anschließend wird wenigstens ein Bitpuls, vorzugsweise der Bitpuls mehrmals oder eine Folge von Bitpulsen, vorzugsweise eine Testfolge von definiert aufeinander folgenden Bitpulsen definierter Bitwerte, untersucht. Um eine bessere Statistik zu erhalten, wird auch die Testfolge vorzugsweise mehrmals, beispielsweise sechzehn mal aufeinanderfolgend, untersucht. Bei jedem Bitpuls wird ermittelt, bei welchem Abtastpunkt die Flanke des Bitpulses auftritt. Eine Flanke ist dabei als Bitwertwechsel definiert, wobei die genaue Lage der Flanke durch einen Durchgang durch einen bestimmten Schwellenwert, beispielsweise 0,5 * die maximale Amplitude, bestimmt wird. Konnte bei einem Bitpuls zu einem bestimmten Abtastpunkt eine Flanke ermittelt werden, wird der zu diesem Abtastpunkt zugehörige Wert auf 1 gesetzt und verbleibt bei diesem Wert.

Im optimalen Fall, wie in Figur 1 dargestellt, tritt die Flanke bei einem Bitwertwechsel immer zum gleichen Abtastzeitpunkt auf, im vorliegenden Beispiel nämlich zum zweiten Abtastpunkt, d. h. der Abtastpunkt, der in dem Balken mit 1 nummeriert ist. Nur diesem Abtastpunkt wurde der Wert 1 zugeordnet. Die Flanken liegen somit in einem sehr schmalen Bereich, der durch die senkrechten gepunkteten Linien in Figur 1 markiert ist und der nur einen der Abtastpunkte, nämlich den mit 1 nummerierten Abtastpunkt, umfasst. Der Bereich der Abtastpunkte, denen der Wert 0 zugeordnet ist, und in welchem die Bitwerte stabil anliegen, ist somit so groß wie möglich. Er umfasst nämlich N Abtastpunkte mit N = 7, nämlich den Bereich ausgehend von dem mit 2 nummerierten Abtastpunkt im ersten Bit bis zu dem mit 0 nummerierten Abtastpunkt des darauffolgenden Bits.

Werden nun die Signalfolgen mit der Bitfrequenz f1 abgetastet, kann die Abtastung synchronisiert mit jedem der N Abtastpunkte erfolgen, da in diesem Bereich die Bitwerte stabil anliegen.

Vorzugsweise erfolgt die Abtastung mit der Bitfrequenz f1 jedoch synchronisiert mit einem in der Mitte des Bereichs aus N Abtastpunkten liegenden Punkt, der im folgenden mit Zentrum bezeichnet werden soll, da die Wahrscheinlichkeit, dass ein Bitwertwechsel im inneren Bereich des Bereichs aus N Abtastpunkten auftritt, geringer ist als die Wahrscheinlichkeit dafür, dass ein Bitwertwechsel an einem der Randpunkte des Bereichs aus N Abtastpunkten auftreten könnte. Das Zentrum bestimmt sich, falls N ungerade ist, zu N/2 + ½ oder N/2 + 1 ½, oder, falls N gerade ist, zu N/2 + 1. Im vorliegenden Fall ist N = 7. Das Zentrum liegt somit bei 4 oder 5. Da der erste Randpunkt (N = 1) des Bereichs aus N Abtastpunkten, für die der Wert 0 ermittelt wurde, bei dem mit 2 bezeichneten Abtastpunkt liegt, liegt das Zentrum somit bei den mit 5 oder 6 bezeichneten Abtastpunkten. Vorliegend wurde der mit 6 bezeichnete Abtastpunkt als Zentrum gewählt, da aufgrund des exponentiellen Abstiegs oder Abfalls des Signals der nachfolgende Abtastpunkt einen stabileren Bitwert gewährleisten sollte, solange es sich bei dem nachfolgenden Abtastpunkt nicht um einen Randpunkt oder gar um einen Abtastpunkt, dem der Wert 1 zugeordnet wurde, was bedeutet, dass zu diesem Abtastpunkt ein Bitwertwechsel auftreten kann, handelt. Das Zentrum ist in Figur 1 durch die gestrichelte Linie markiert. Synchronisiert mit diesem Abtastpunkt erfolgt anschließend bei der Abtastung der zu übertragenden Bitfolge in jedem Bit die Abtastung zur Ermittlung, ob dem Bit der Wert 1 oder 0 zugeordnet werden muss.

Besonders bevorzugt erfolgt die Abtastung der Bitfolge synchronisiert mit jedem der Abtastpunkte, denen der Wert 0 zugeordnet wurde. Anschließend werden die erhaltenen Abtastwerte aufaddiert und die dabei erhaltene Summe durch die Anzahl der Abtastpunkte, denen der Wert 0 zugeordnet wurde, dividiert. Der dabei ermittelte Mittelwert wird nach Rundung als Abtastwert für das jeweilige Bit übertragen. Diese Mittelwertbildung über den gesamten Bereich von Abtastpunkten, denen der Wert 0 zugeordnet wurde, und der sich damit als stabiler Bereich erwiesen hat, macht das erfindungsgemäße Verfahren unempfindlicher gegen Störungen. Im vorliegenden Fall wird somit nicht nur synchronisiert mit dem als Zentrum bestimmten Abtastpunkt, sondern zu sämtlichen Abtastpunkten 2, 3, 4, 5, 6, 7 und 0 abgetastet. Zu jedem dieser Abtastpunkt sollte der erwartete Bitwert bereits stabil anliegen. Sollte dies jedoch ausnahmsweise bei einem der Abtastpunkte nicht der Fall sein, ergibt sich trotzdem nach Addition der zu den Abtastpunkten ermittelten Abtastwerte und Mittelwertbildung über die Anzahl der Abtastwerte, nämlich 7, nach Rundung wiederum der erwartete Bitwert, wodurch das Verfahren unempfindlicher gegen Störungen wird.

In Figur 2 ist ein realistischer Fall von Signalfolgen 1', 2' dargestellt, bei welchen einerseits eine zeitliche Verschiebung in der Flanken auftritt, andererseits die Steigung der ansteigenden bzw. abfallenden Flanke der einzelnen Bitpulse nicht immer identisch ist. Dadurch ergeben sich Flankenlagen bei unterschiedlichen Abtastpunkten der einzelnen Bitpulse.

Zur Bestimmung des günstigsten Abtastzeitpunkts wird wiederum zunächst den Abtastpunkten sämtlich der Wert 0 zugeordnet. Anschließend wird wiederum wenigstens ein Bitpuls, vorzugsweise der Bitpuls mehrmals oder eine Folge von Bitpulsen, vorzugsweise eine Testfolge von definiert aufeinander folgenden Bits definierter Bitwerte, vorzugsweise mehrmals, insbesondere sechzehnmal aufeinanderfolgend untersucht. Sollte sich dabei ergeben, dass sämtlichen Abtastzeitpunkten der Wert 1 zugeordnet wurde, ist keine Abtastung möglich, da die einzelnen Bitwerte nicht synchronisiert anliegen. Um das Verfahren sinnvoll durchführen zu können, sollte sich ein stabiler Bereich von wenigstens drei aufeinanderfolgenden Abtastpunkten, denen der Wert 0 zugeordnet wurde, ergeben. Im vorliegenden in Figur 2 dargestellten Fall konnte jedoch auch nach Überprüfung mehrerer Bitfolgen zur Erzielung einer ausreichenden Statistik den mit 0, 1, 2 und 7 bezeichneten Abtastpunkten der Wert 1 zugeordnet werden, während den mit 3, 4, 5 und 6 bezeichneten Abtastpunkten der Wert 0 zugeordnet wurde. Die Flankenlage variiert somit zwar innerhalb bestimmter Grenzen, die durch die gepunkteten senkrechten Linien in Figur 2 angedeutet sind; in einem Bereich aus N Abtastpunkten mit N = 4 ist jedoch davon auszugehen, dass die Bitwerte stabil anliegen und eine zuverlässige Abtastung der zu übertragenden Bitfolgen in diesem Bereich erfolgen kann. Auch hier wird vorzugsweise das wie zuvor zu ermittelnde Zentrum als bestmöglicher Abtastpunkt gewählt. Da vorliegend N gerade ist, ergibt sich das Zentrum zu N/2 +1 = 3. Da der erste Randpunkt (N=1) des Bereichs aus N Abtastpunkten, für die der Wert 0 ermittelt wurde, dem mit 3 bezeichneten Abtastpunkt zugeordnet ist, ergibt sich das Zentrum als der mit 5 bezeichnete Abtastpunkt. Das Zentrum ist wiederum durch die senkrechte gestrichelte Linie in Figur 2 markiert. Synchronisiert mit diesem Abtastpunkt erfolgt anschließend wiederum in jedem Bit der zu übertragenden Bitfolge die Abtastung zur Ermittlung, ob dem Bit der Wert 1 oder 0 zugeordnet werden muss.

Bei dem bevorzugten, weniger störanfälligen Verfahren wird nicht nur synchronisiert mit dem als Zentrum ermittelten Abtastpunkt, sondern zu sämtlichen Abtastpunkten 0, 1, 2 und 7 abgetastet, die vier erhaltenen Abtastwerte aufaddiert und der Mittelwert gebildet, welcher anschließend gerundet wird.

Das beschriebene Verfahren zur Bestimmung des günstigsten Abtastpunkts zur Synchronisation der Übertragung einer Bitfolge kann grundsätzlich vor jeder Signalübertragung, insbesondere aber als Lernzyklus beispielsweise bei jedem Einschalten eines entsprechenden Geräts zur Signalübertragung durchgeführt werden, um anschließend die zu übermittelnden Signale möglichst fehlerfrei abtasten und übertragen zu können. Das Verfahren ist unabhängig von den zu übertragenden Signalen und unabhängig von den Komponenten, zwischen denen Signale übertragen werden sollen, einsetzbar. Vorzugsweise wird es jedoch angewendet für Bitfolgen, welche zwischen Messeinheiten eines Senders und einer Auswerteeinheit eines Empfängers ausgetauscht werden, da gerade bei Messeinheiten die gemessenen Größen möglichst fehlerfrei übertragen werden sollen. Eine hohe Genauigkeit der übertragenen Signale ist insbesondere vonnöten, wenn es sich bei der Messeinheit um eine Positionsmesseinheit handelt.

Es versteht sich von selbst, dass durch eine entsprechend geänderte Schaltung grundsätzlich die Werte 0 und 1 auch vertauscht werden können und dass die Werte 0 und 1 nur zwei unterschiedliche Zustände, insbesondere zwei unterschiedliche Potentiale, bezeichnen.

Die Vorrichtung zur Durchführung eines Verfahren zur Synchronisation der Übertragung einer Bitfolge der Bitfrequenz f1 gemäß einem der vorhergehenden Ansprüche weist einen Sender und einen Empfänger auf, zwischen welchen die Bitfolge übertragen wird. Beispielsweise wird die Bitfolge zwischen Messeinheiten des Senders und einer Auswerteeinheit des Empfängers ausgetauscht wird. Die Messeinheiten des Senders können insbesondere als Positionsmesseinheiten ausgebildet sein. Die Vorrichtung weist eine erste Vorrichtung zum Abtasten wenigstens eines Bitpulses in dem Empfänger mit einer Abtastfrequenz f2, die größer ist als die Bitfrequenz f1 der Bitfolge, so dass sich innerhalb dieses Bitpulses mehrere Abtastpunkte ergeben, auf. Weiterhin weist die Vorrichtung eine zweite Vorrichtung zum Zuordnen des Werts 0 zu sämtlichen Abtastpunkten auf, welche beispielsweise in einem Register besteht, dessen Anzahl an Registerwerten der Anzahl der Abtastpunkte innerhalb eines Bitpulses entspricht. Die Vorrichtung weist eine dritte Vorrichtung zum Ermitteln des Abtastpunktes, bei dem eine Flanke des Bitpulses detektiert wird, und zum Zuordnen des Wertes 1 zu diesem Abtastpunkt sowie eine vierte Vorrichtung zum Abtasten der Bitfolge mit der Bitfrequenz f1 synchronisiert mit einem der Abtastpunkte, denen der Wert 0 zugeordnet wurde, auf.

## Patentansprüche

1. Verfahren zur Synchronisation der Übertragung einer Bitfolge der Bitfrequenz f1 von einem Sender zu einem Empfänger mit den Schritten:
a) Abtasten wenigstens eines Bitpulses in dem Empfänger mit einer Abtastfrequenz f2, welche ein ganzzahliges Vielfaches der Bitfrequenz f1 der Bitfolge ist, so dass sich innerhalb dieses Bitpulses mehrere Abtastpunkte ergeben,
b) Zuordnen des Werts 0 zu sämtlichen Abtastpunkten,
c) Ermitteln des Abtastpunktes, bei dem eine Flanke des Bitpulses detektiert wird, und Zuordnen des Wertes 1 zu diesem Abtastpunkt,
d) Mehrmaliges Wiederholen von Schritt c) an dem Bitpuls oder einer Folge von Bitpulsen,
e) Abtasten der Bitfolge mit der Bitfrequenz f1,

2. Verfahren nach Anspruch 1,
**dadurch gekennzeichnet, dass** vor Durchführung des Schritts d) die Schritte a) bis c) mehrmals, insbesondere als Lernzyklus, durchlaufen werden.

3. Verfahren nach Anspruch 2,
**dadurch gekennzeichnet, dass** beim mehrmaligen Durchlaufen der Schritte a) bis c) die abgetasteten Bitpulse Teil einer definierte Testfolge von Bits sind.

4. Verfahren nach Anspruch 3,
**dadurch gekennzeichnet, dass** zur Bestimmung der Abtastpunkte, bei denen eine Flanke detektiert wird, die Testfolge mehrmals, vorzugsweise sechzehnmal, durchlaufen wird.

5. Verfahren nach einem der vorhergehenden Ansprüche,
**dadurch gekennzeichnet, dass** vor Schritt d) das Zentrum des Bereichs von Abtastpunkten bestimmt wird, denen der Wert 0 zugeordnet wurde und in Schritt d) die Bitfolge synchronisiert mit dem als Zentrum bestimmten Abtastpunkt abgetastet wird.

6. Verfahren nach Anspruch 5,
**dadurch gekennzeichnet, dass** als Zentrum der Abtastpunkt bestimmt wird, der bei einer ungeraden Anzahl N von Abtastpunkten mit dem Wert 0 dem Wert N/2 + ½ oder N/2 + 1 ½ entspricht, und der bei einer geraden Anzahl N von Abtastpunkten mit dem Wert 0 dem Wert N/2 + 1 entspricht.

7. Verfahren nach einem der vorhergehenden Ansprüche,
**dadurch gekennzeichnet, dass** die Abtastfrequenz f2 achtmal größer ist als die Bitfrequenz f1, so dass sich innerhalb eines Bitpulses acht Abtastpunkte ergeben.

8. Verfahren nach einem der vorhergehenden Ansprüche,
**dadurch gekennzeichnet, dass** die Bitfolge zwischen Messeinheiten des Senders und einer Auswerteeinheit des Empfängers ausgetauscht wird.

9. Verfahren nach einem der vorhergehenden Ansprüche,
**dadurch gekennzeichnet, dass** die Messeinheiten als Positionsmesseinheiten ausgebildet sind.

10. Vorrichtung zur Durchführung eines Verfahren zur Synchronisation der Übertragung einer Bitfolge der Bitfrequenz f1 gemäß einem der vorhergehenden Ansprüche mit einem Sender und einem Empfänger, zwischen welchen die Bitfolge übertragen wird, mit einer ersten Vorrichtung zum Abtasten wenigstens eines Bitpulses in dem Empfänger mit einer Abtastfrequenz f2, die ein ganzzahliges Vielfaches der Bitfrequenz f1 der Bitfolge ist, so dass sich innerhalb dieses Bitpulses mehrere Abtastpunkte ergeben, mit einer zweiten Vorrichtung zum Zuordnen des Werts 0 zu sämtlichen Abtastpunkten, mit einer dritten Vorrichtung zum mehrmalig wiederholten Ermitteln des Abtastpunktes, bei dem eine Flanke des Bitpulses detektiert wird, und zum Zuordnen des Wertes 1 zu diesem Abtastpunkt und mit einer vierten Vorrichtung zum Abtasten der Bitfolge mit der Bitfrequenz f1, wobei die Bitfolge synchronisiert mit jedem der Abtastpunkte, denen der Wert 0 zugeordnet wurde, abgetastet wird, die erhaltenen Abtastwerte aufaddiert und die erhaltene Summe durch die Anzahl der Abtastpunkte, denen der Wert 0 zugeordnet wurde, dividiert wird und der so ermittelte Mittelwert nach Rundung als Abtastwert für das jeweilige Bit übertragen wird.

## Claims

1. A method of synchronizing the transmission of a bit sequence of the bit frequency f1 from a transmitter to a receiver with the steps:
a) scanning at least one bit pulse in the receiver with a scanning frequency f2 which is an integral multiple of the bit frequency f1 of the bit sequence, so that a plurality of scanning points are produced inside this bit pulse,
b) assigning the value 0 to all the scanning points,
c) determining the scanning point at which a flank of the bit pulse is detected, and assigning the value 1 to this scanning point,
d) repeating step c) multiple times at the bit pulse or a sequence of bit pulses,
e) scanning the bit sequence with the bit frequency f1.

2. A method according to claim 1, **characterized in that** steps a) to c) take place multiple times, in particular as a learning cycle, before step d) is carried out.

3. A method according to claim 2, **characterized in that** when steps a) to c) take place multiple times the bit pulses scanned are part of a defined test sequence of bits.

4. A method according to claim 3, **characterized in that**, in order to determine the scanning points at which a flank is detected, the test sequence is run through multiple times, preferably sixteen times.

5. A method according to any one of the preceding claims, **characterized in that** before step d) the centre of the region of scanning points is determined, to which the value 0 has been assigned, and in step d) the bit sequence is scanned in a manner synchronized with the scanning point determined as the centre.

6. A method according to claim 5, **characterized in that** the scanning point, which corresponds to the value N/2 + ½ or N/2 + 1½ when the number N of scanning points with the value 0 is odd and which corresponds to the value N/2 + 1 when the number N of scanning points with the value 0 is even, is determined as the centre.

7. A method according to any one of the preceding claims, **characterized in that** the scanning frequency f2 is eight times larger that the bit frequency f1, so that eight scanning points are present inside a bit pulse.

8. A method according to any one of the preceding claims, **characterized in that** the bit sequence is exchanged between measuring units of the transmitter and an evaluation unit of the receiver.

9. A method according to any one of the preceding claims, **characterized in that** the measuring units are designed as position-measuring units.

10. A device for performing a method of synchronizing the transmission of a bit sequence of the bit frequency f1 according to any one of the preceding claims with a transmitter and a receiver, between which the bit sequence is transmitted, with a first device for scanning at least one bit pulse in the receiver with a scanning frequency f2 which is an integral multiple of the bit frequency f1 of the bit sequence, so that a plurality of scanning points are produced inside this bit pulse, with a second device for assigning the value 0 to all the scanning points, with a third device for determining, in a multiply repeated manner, the scanning point at which a flank of the bit pulse is detected, and for assigning the value 1 to this scanning point, and with a fourth device for scanning the bit sequence with the bit frequency f1, wherein the bit sequence is scanned in a manner synchronized with each of the scanning points to which the value 0 has been assigned, the scanned values obtained are added up and the sum obtained is divided by the number of the scanning points to which the value 0 has been assigned, and the average determined in this way is transmitted after rounding as a scanned value for the respective bit.

## Revendications

1. Procédé de synchronisation de la transmission d'un train de bits à la fréquence de bit f1 d'un émetteur vers un récepteur comprenant les étapes suivantes :
a) détection d'au moins une impulsion de bit dans le récepteur à une fréquence de détection f2 qui est un multiple entier de la fréquence de bit f1 du train de bits de façon à avoir plusieurs points de détection dans cette impulsion de bit,
b) attribuer la valeur 0 à tous les points de détection,
c) déterminer le point de détection pour lequel on détecte un flanc de l'impulsion de bit et attribuer la valeur 1 à ce point de détection,
d) répéter plusieurs fois l'étape c) appliquée à l'impulsion de bit ou à un train d'impulsions de bits,
e) détecter le train de bits à la fréquence f1, le train de bits étant détecté de manière synchronisée à chacun des points de détection auxquels a été associée la valeur 0, on additionne les valeurs de détection obtenues et on divise la somme obtenue par le nombre des points de détection auxquels a été associée la valeur 0 et on transmet la valeur moyenne ainsi obtenue après l'avoir arrondie, comme valeur de détection pour chaque bit respectif.

2. Procédé selon la revendication 1,
**caractérisé en ce qu'**
avant d'exécuter l'étape d), on parcourt plusieurs fois les étapes a)...c), notamment comme cycle d'apprentissage.

3. Procédé selon la revendication 2,
**caractérisé en ce que**
les impulsions de bits détectées par les multiples passages des étapes a)...c), sont un train d'essai définie de bits.

4. Procédé selon la revendication 3,
**caractérisé en ce que**
pour déterminer les points de détection pour lesquels on détecte un flanc, on parcourt plusieurs fois, de préférence 16 fois, le train d'essai.

5. Procédé selon l'une des revendications précédentes,
**caractérisé en ce qu'**
avant l'étape d), on détermine le centre de la plage des points de détection auxquels a été associée la valeur 0, et
dans l'étape d), non synchronise le train de bits avec le point de détection défini comme centre.

6. Procédé selon la revendication 5,
**caractérisé en ce qu'**
on détermine comme centre, le point de détection pour lequel un nombre impair N de points de détection de valeur 0 correspond à la valeur N/2 + ½ ou N/2 + 1 ½, et pour lequel un nombre pair N de points de détection de valeur 0 correspond à la valeur N/2 + 1.

7. Procédé selon l'une des revendications précédentes,
**caractérisé en ce que**
la fréquence de détection f2 est huit fois supérieure à la fréquence de bit f1 de sorte qu'à l'intérieur d'une impulsion de bit, on aura huit points de détection.

8. Procédé selon l'une des revendications précédentes,
**caractérisé en ce qu'**
on échange le train de bits entre des unités de mesure de l'émetteur et une unité d'exploitation du récepteur.

9. Procédé selon l'une des revendications précédentes,
**caractérisé en ce que**
les unités de mesure sont réalisées comme unités de mesure de position.

10. Dispositif pour la mise en oeuvre d'un procédé de synchronisation de la transmission d'un train de bits à la fréquence de bit f1 selon l'une des revendications précédentes avec un émetteur et un récepteur entre lesquels on transmet le train de bits,
dispositif comprenant :
- un premier dispositif pour détecter au moins une impulsion de bit dans le récepteur à une fréquence de détection f2 qui est un multiple entier de la fréquence de bit f1 du train de bits pour avoir plusieurs points de détection, dans cette impulsion de bit,
- un second dispositif pour associer la valeur 0 à tous les points de détection,
- un troisième dispositif pour répéter plusieurs fois la détermination du point de détection pour lequel on a détecté un flanc de l'impulsion de bit et pour associer la valeur 1 à ce point de détection, et
- un quatrième dispositif pour détecter le train de bits à la fréquence f1, le train de bits étant détecté de manière synchronisée à chacun des points de détection auxquels a été associée la valeur 0, on additionne les valeurs de détection obtenues et on divise la somme obtenue par le nombre des points de détection auxquels a été associée la valeur 0 et on transmet la valeur moyenne ainsi obtenue après l'avoir arrondie, comme valeur de détection pour chaque bit respectif.
